# EUROPÄISCHE PATENTSCHRIFT

(11) **EP 0 794 093 B1**
(45) Veröffentlichungstag und Bekanntmachung des Hinweises auf die Patenterteilung: **26.04.2000**
(21) Anmeldenummer: 97102736.2
(22) Anmeldetag: 20.02.1997
(51) Int. Cl.: B60R 21/32, B60R 21/00

(54) **Steuereinheit für Front- und Seitenairbags eines Insassenschutzsystems**
Control unit for front and side airbags in an occupant protection system
Unité de commande pour sac gonflable frontal et latéral d'un système de protection des occupants

(30) Priorität: 04.03.1996 DE 19608180
(43) Veröffentlichungstag der Anmeldung: 10.09.1997
(73) Patentinhaber: ADAM OPEL AG, 65423 Rüsselsheim (DE)
(72) Erfinder: Römer, Thomas, Dipl.-Ing. (FH), 65428 Rüsselsheim (DE)
(74) Vertreter: Bergerin, Ralf, Dipl.-Ing.

(56) Entgegenhaltungen:
- DE-A- 4 322 488
- GB-A- 2 270 183

## Beschreibung

Die Erfindung bezieht sich auf eine Steuereinheit, die Front- und Seitenairbags in einem Kraftfahrzeug selektiv unfallabhängig auslöst. Zur Analyse von Unfallsituationen kommuniziert die Steuereinheit mit Sensoren, wie dies bekannt ist. Zu einer Steuerung der Seitenairbags sind Drucksensoren, deren prinzipielle Arbeitsweise in der DE-A- 43 22 488 beschrieben ist, in Seitenteilen des Kraftfahrzeugs angeordnet. Insbesondere werden solche Drucksensoren in Hohlräumen von Türen des Kraftfahrzeugs angeordnet, wo sie den Luftdruck in ihrer Umgebung erfassen. Bei einem unfallbedingten seitlichen Stoß auf eine solche Tür kommt es zu einem stoßartigen Anstieg des Luftdrucks im Hohlraum. Mit entsprechenden Meßwerten ist also eine relativ eindeutige Erfassung eines Seitencrashs möglich. Genauere Unterscheidungsmerkmale hinsichtlich des Unfallverlaufs können durch Analyse des gemessenen Luftdrucks gefunden werden. Der erfaßte Luftdruck wird insbesondere mit einem Schwellenwert verglichen. Es können auch weitere Analysen hinsichtlich des zeitlichen Luftdruckverlaufs stattfinden, wodurch ein Unfall beispielsweise von einem Hammerschlag unterscheidbar ist. Zusätzlich ist nach der DE-A- 43 22 488 auch die Möglichkeit vorgesehen, neben dem Drucksensor weitere Sensoren zur Ermittlung der Querbeschleunigung des Kraftfahrzeugs vorzusehen. Damit wird das Ziel verfolgt, die Seitenairbags nur dann, wenn zwingend nötig auszulösen.

In der DE-A- 43 22 488 ist ausgeführt, daß Störungen wie Zuschlagen einer Tür, Auftreffen eines Fußballs, Aufprall eines Fahrrades oder leistungsstarke Lautsprecher keine Luftdruckänderungen bewirken, die zur Auslösung eines Seitenairbags führen.

Da Hohlräume in Fahrzeugtüren nur bedingt luftdicht abgeschlossene Räume sind, wird davon ausgegangen, daß doch gewisse, nicht direkt unfallbedingte Störungen auf einen dort angeordneten Drucksensor einwirken. Dies wird auch bei Betrachtung der sehr aufwendig gestalteten Lösung nach der DE-A- 43 24 753 deutlich. In der DE-A-195 04 353 wird ein Drucksensor in ebenfalls äußerst aufwendiger Weise in einem extra vorzusehenden verformbaren Kasten untergebracht. Nur bei Verformung des Kastens (durch einen Seitencrash) werden Druckveränderungen im Kasteninneren erfaßt.

Es ist Aufgabe der Erfindung, mit geringem Aufwand eine gattungsgemäße Steuereinheit, wie zum Beispiel aus der DE-A-4322488 bekannt ist, für Front- und Seitenairbags zu schaffen, die insbesondere bei einem unter verschiedenen Bedingungen möglichen Seitencrash sicher die Auslösung zumindest eines jeweils vorgesehenen Seitenairbags bewirkt. Die unnötige Auslösung eines Seitenairbags soll vermieden werden.

Zur Lösung dieser Aufgabe zeichnet die erfindungsgemäße Steuereinheit durch die im Patentanspruch 1 angegebenen Merkmale aus. Weitere Gestaltungsmerkmale ergeben sich aus den Patentansprüchen 2 bis 5.

Wie eingangs ausgeführt, führen Störungen (Tür zuschlagen, Fußball, Fahrrad, Lautsprecher) nicht zu einer ungewollten Auslösung von Seitenairbags. Somit kann auf sehr einfache Weise ausschließlich auf Signale von Drucksensoren in bereits vorhandenen Hohlräumen von Fahrzeugtüren zurückgegriffen werden, um eine Entscheidung zur Auslösung eines Seitenairbags zu treffen. Eine Steuerung der Seitenairbags löst aus, wenn ein Luftdruck-Schwellenwert überschritten wird und berücksichtigt ggf. den zeitlichen Verlauf des Druckanstiegs. Durch experimentelle Untersuchungen und Unfallanalysen hat sich jedoch überraschend herausgestellt, daß der Luftdruck in den Hohlräumen der Türen relativ schlagartig bei Auslösung zumindest eines Frontairbags ansteigt. Dies ist auch nachvollziehbar, da insbesondere bei schon älteren Fahrzeugen Türinnenverkleidungen eine Vielzahl undichter Stellen aufweisen können, so daß der Türhohlraum im wesentlichen als offen zum Fahrzeuginnenraum anzusehen ist. Der Druckanstieg durch Frontairbag-Auslösung ist zwar nicht so hoch, daß auch die Seitenairbags ausgelöst werden, jedoch ist die Differenz zum Schwellenwert wesentlich geringer, als unter normalen Bedingungen. Es genügen also geringere Druckimpulse auf eine Seitentür, um die Seitenairbags auszulösen, wenn ein Frontairbag ausgelöst wurde. Bei Unfällen kann es nun leicht möglich sein, daß einem Frontalaufprall (Auslösung der Frontairbags) ein Seitenaufprall folgt. Auch unter diesen Bedingungen wird erfindungsgemäß ein Seitenairbag nur dann ausgelöst, wenn dies sinnvoll ist, indem der Schwellenwert für die Seitenairbag-Auslösung nach Frontairbag-Auslösung zeitweise gegenüber einem Normalwert erhöht wird. Dies kann durch Summen oder Produktbildung mit experimentell ermittelten Werten erfolgen oder der Normalwert (Schwellenwert unter normalen Bedingungen) wird nach Frontairbag-Auslösung zeitweise durch einen höheren Schwellenwert ersetzt. Die Zeitdauer, für die der Normalwert zu erhöhen ist, wird ebenfalls experimentell ermittelt, indem festgestellt wird, wieviel Zeit vergeht, bis sich der Druck im Türhohlraum nach einer Frontairbag-Auslösung wieder normalisiert.

Prinzipiell ist zu gewährleisten, daß der Steuerung der Seitenairbags eine Eingangsgröße zur Verfügung gestellt wird, die die Zündung eines Frontairbags signalisiert. Dies ist mit sehr geringem Aufwand möglich. Falls ein Steuergerät bekannter Bauart zumindest für die Auslösung aller Airbags zuständig ist, kann ein internes Signal entsprechend generiert werden. Sind unterschiedliche Steuergeräte für die Front- und die Seitenairbags im Kraftfahrzeug angeordnet, sind Mittel zum Datenaustausch zwischen diesen Steuergeräten vorzusehen, so daß auch hier eine erfindungsgemäße Steuereinheit entsteht.

Die experimentell ermittelten Faktoren, Summanden oder Ersatz-Schwellenwerte sind in einem elektronischen Speicher abzulegen, der neben einem Prozessor in der Regel schon Bestandteil von Steuergeräten nach dem Stand der Technik ist und damit keinen zusätzlichen Aufwand erforderlich macht.

Die Änderung des Schwellenwertes sollte in Abhängigkeit von der Anzahl und der Große der ausgelösten Frontairbags erfolgen. Nutzt das Insassenschutzsystem eine Sitzbelegungserkennung ist hier zu unterscheiden, ob nur ein oder mehrere Frontairbags ausgelöst wurden.

Vorzugsweise sollten die Faktoren, Summanden oder Ersatz-Schwellenwerte zeitlich veränderliche Größen sein, die dem Druckverlauf nach einer Frontairbag-Auslösung Rechnung tragen.

Mit der Erfindung ist es möglich, Signale von Drucksensoren in Kraftfahrzeug-Seitenteilen auch unter extremen Bedingungen zu nutzen, um eine richtige Entscheidung zur Auslösung von Seitenairbags zu treffen. Die unnötige Auslösung der Seitenairbags nach Frontairbag-Auslösung wird vermieden. Dies erfolgt mit geringem Aufwand und vermeidet hohe Kosten für den Fahrzeugnutzer, die durch unnötige Seitenairbag-Auslösung entstehen.

Die detaillierte Beschreibung eines Ausführungsbeispiels erübrigt sich nach der ausführlichen allgemeinen Erfindungsbeschreibung, da es dem Fachmann ohne weiteres möglich ist, die Erfindung nachzuvollziehen.

## Patentansprüche

1. Steuereinheit für Front- und Seitenairbags eines Insassenschutzsystems in einem Kraftfahrzeug, zur selektiven unfallabhängigen Auslösung zumindest eines Front- und/oder Seitenairbags, mit zumindest zwei zur Steuerung der Seitenairbags gehörenden Drucksensoren in Seitenteilen des Kraftfahrzeugs, wobei zumindest ein Seitenairbag ausgelöst wird, wenn der Luftdruck in der Umgebung eines Drucksensors stoßartig über einen Schwellenwert ansteigt, **dadurch gekennzeichnet,** daß der Schwellenwert für die Auslösung der Seitenairbags nach Auslösung zumindest eines Frontairbags zeitweise gegenüber einem Normalwert erhöht ist.

2. Steuereinheit nach Anspruch 1, **dadurch gekennzeichnet,** daß ein Auslösesignal für zumindest einen Frontairbag als Eingangsgröße der Steuerung der Seitenairbags zugeführt wird.

3. Steuereinheit nach den Ansprüchen 1 und 2, **dadurch gekennzeichnet,** daß der Schwellenwert in Abhängigkeit von der Anzahl und Größe der ausgelösten Frontairbags um experimentell ermittelte, feste oder zeitlich variable Werte und für eine experimentell ermittelte Zeitdauer erhöht ist, wobei die ermittelten Werte in einem elektronischen Speicher der Steuereinheit abgelegt sind.

4. Steuereinheit nach den Ansprüchen 1 bis 3, **dadurch gekennzeichnet,** daß die in dem Speicher abgelegten Werte zur Erhöhung des Normalwertes nach Auslösung zumindest eines Frontairbags in Summe oder Produkt mit dem Normalwert den Schwellenwert bilden oder den Normalwert als Schwellenwert ersetzen.

5. Steuereinheit nach den Ansprüchen 1 bis 4, **gekennzeichnet durch** ein mit Sensoren kommunizierendes Steuergerät zumindest für alle Airbags des Insassenschutzsystems oder durch separate Steuergeräte für die Frontairbags und die Seitenairbags mit Mitteln zum Datenaustausch zwischen den Steuergeräten.

## Claims

1. Control unit for front and side airbags of a passenger protection system in a motor vehicle, for the selective accident-related tripping of at least one front and/or side airbag, with at least two pressure sensors in side parts of the motor vehicle, which belong to the control system for the side airbags, wherein at least one side airbag is tripped when the air pressure in the environment of a pressure sensor suddenly rises above a threshold value, characterised in that the threshold value for tripping the side airbags after tripping of at least one front airbag is temporarily raised from a normal value.

2. Control unit according to claim 1, characterised in that a trip signal for at least one front airbag is fed as an input variable to the control system for the side airbags.

3. Control unit according to claims 1 and 2, characterised in that the threshold value is raised as a function of the number and size of the tripped front airbags by experimentally determined values which are fixed or variable with time and for an experimentally determined length of time, wherein the determined values are filed in an electronic memory of the control unit.

4. Control unit according to claims 1 to 3, characterised in that the values filed in the memory for raising the normal value after tripping of at least one front airbag in sum or product with the normal value form the threshold value or replace the normal value as the threshold value.

5. Control unit according to claims 1 to 4, characterised by a control device communicating with sensors at least for all airbags of the passenger protection system or by separate control devices for the front airbags and the side airbags with means for data exchange between the control devices.

## Revendications

1. Unité de commande pour les coussins gonflables frontaux et latéraux d'un système de protection des passagers dans un véhicule automobile, pour le déclenchement sélectif, en relation avec un accident, d'au moins un coussin gonflable frontal et/ou au moins un coussin gonflable latéral, comportant au moins deux capteurs de pression appartenant à la commande des coussins gonflables latéraux, disposés dans des parties latérales du véhicule, au moins un coussin gonflable latéral étant déclenché lorsque la pression de l'air dans la région d'un détecteur de pression augmente brutalement au-dessus d'une valeur seuil, caractérisée par le fait que la valeur seuil pour le déclenchement du coussin gonflable latéral, après le déclenchement d'un coussin gonflable frontal, est augmentée temporairement par rapport à une valeur normale.

2. Unité de commande selon la revendication 1, caractérisée par le fait qu'un signal de déclenchement pour au moins un coussin gonflable frontal est transmis en tant que grandeur d'entrée à la commande du coussin gonflable latéral.

3. Unité de commande selon les revendications 1 et 2, caractérisée par le fait que la valeur seuil est augmentée par des valeurs fixes ou variables dans le temps, déterminées de manière empirique, et pour une durée déterminée de manière empirique en fonction du nombre et de la taille des coussins gonflables frontaux déclenchés, les valeurs déterminées étant mémorisées dans une mémoire électronique de l'unité de commande.

4. Unité de commande selon les revendications 1 à 3, caractérisée par le fait que les valeurs mémorisées dans la mémoire pour augmenter la valeur normale à la suite du déclenchement d'au moins un coussin gonflable frontal forment la valeur seuil par addition ou par multiplication avec la valeur normale ou remplacent la valeur normale en tant que valeur seuil.

5. Unité de commande selon les revendications 1 à 4, caractérisée par un appareil de commande communiquant avec des capteurs au moins pour tous les coussins gonflables du système de protection des passagers ou par des appareils de commande séparés pour les coussins gonflables frontaux et les coussins gonflables latéraux avec des moyens pour l'échange de données entre les appareils de commande.
